# EUROPÄISCHE PATENTANMELDUNG

(11) **EP 1 168 549 A1**
(43) Veröffentlichungstag der Anmeldung: **02.01.2002**
(21) Anmeldenummer: 01114302.1
(22) Anmeldetag: 13.06.2001
(51) Int. Cl.: H02B 1/044

(54) **Rufgeber zur Eingabe von Steuerbefehlen, insbesondere für eine Aufzugsanlage**

(30) Priorität: 26.06.2000 EP 00810562
(71) Anmelder: INVENTIO AG, CH-6052 Hergiswil (CH)
(72) Erfinder: Felder, Hugo, 6033 Buchrain (CH)

(57) **Zusammenfassung**

Die Erfindung betrifft einen Rufgeber zur Eingabe von Steuerbefehlen, insbesondere für eine Aufzugsanlage, welcher mindestens ein Trägerelement (2) und ein eine erste Seite (9) und eine zweite mit einem Flansch (20) versehene Seite (10) aufweisendes Rufgebergehäuse (1) aufweist. Das Trägerelemet (2) kann auch aus mehreren Teilen bestehen und es können auch nur einzelne Teile davon bewegbar ausgebildet sein. Das Rufgebergehäuse (1) weist ein Positionierungselement (7) auf, welches zwischen der ersten Seite (9) und der zweiten Seite (10) in der Mitte des Gehäuses (1) angeordnet ist. Das Rufgebergehäuse (1) lässt sich auf zwei unterschiedliche Varianten in die Frontplatte (5) einbauen, zum einen, dass die erste Stirnseite (9) des Rufgebergehäuses (1) mit der Frontplatte (5) bündig ist, zum anderen, dass die zweite Stirnseite (10) des Rufgebergehäuses (1) um die Distanz des Flansches (20) auf der Frontplatte (5) aufgesetzt montierbar ist.

## Beschreibung

Rufgeber zur Eingabe von Steuerbefehlen, insbesondere für eine Aufzugsanlage.

Die Erfindung betrifft einen Rufgeber zur Eingabe von Steuerbefehlen, insbesondere für eine Aufzugsanlage.

Die gängigen Elemente, wie sie zum Beispiel aus den Schriften US-4742198 oder EP-567357 bekannt sind, sind derart ausgeführt, dass das Rufgebergehäuse nur in einer vorbestimmten Position eingebaut werden kann. Gemäss den obenerwähnten Schriften erfolgt dies entweder aufgesetzt oder bündig zu einer Frontplatte eines Panels. Nachteilig bei dem bekannten Rufgeber ist, dass für jede mögliche Ausführung des Rufgebers, verschiedene Rufgebergehäuse verwendet werden müssen, das heisst ein Rufgebergehäuse pro Rufgeber. Dies führt dazu, dass Rufgebergehäuse sowie die einzelnen Elemente des Rufgebers nur beschränkt, das heisst jeweils nur für bestimmte Einsatzfälle verwendet werden können. Die Anzahl der zu fertigenden Elemente ist gross. Ausserdem können insbesondere die bündig eingebauten Rufgeber meistens nur für eine vordefinierte, maximale Frontplattendicke (typisch 2-4 mm) eingesetzt werden.

Der Erfindung liegt die Aufgabe zugrunde, einen Rufgeber zur Eingabe von Steuerbefehlen der eingangs genannten Art vorzuschlagen, welcher die vorgenannten Nachteile nicht aufweist und mit einem einzigen, identischen Rufgebergehäuse mindestens zwei Ausführungen/Einbauvarianten des Rufgebers möglich sind. Die Anzahl der zu fertigenden Elemente ist klein und für ihre Bereitstellung ist keine grosse Lagerhaltung mehr notwendig.

Diese Aufgabe wird durch die im Patentanspruch 1 erwähnten Merkmale gelöst.

Durch die in den abhängigen Ansprüchen aufgeführten Massnahmen sind vorteilhafte Weiterbildungen und Verbesserungen des im Anspruch 1 angegebenen Rufgebers möglich.

Vorteilhaft ist die spezielle, an der Inneseite symmetrische Konstruktion des Rufgebergehäuses, da sie einen flexiblen Einbau und der Einsatz von identischen Einzelteilen für beide Varianten ermöglicht.

Vorteilhaft ist weiter die Tatsache, dass mit dieser Konstruktion des Rufgebergehäuses sowohl ein bündiger als auch ein aufgesetzter Einbau möglich ist.

Ein weiterer Vorteil besteht darin, dass beide Ausführungen/Einbauvarianten des Rufgebers auch bei grösseren Frontplattendicken eingebaut werden können. Das Rufgebergehäuse kann stufenlos in Frontplatten unterschiedlicher Dicke bis zu einer definierten maximalen Frontplattendicke eingebaut werden.

Ausserdem können beide Einbauvarianten, bündig und aufgesetzt, in einem identischen Einbauausschnitt der Frontplatte montiert werden.

Das Positionierungselement des Rufgebergehäuses wird auch als Begrenzungsfläche für das Trägerelement und für die Elektronikeinheit dienen.

Bei den handelsüblichen Rufgebern sind die Symbole, Ziffern und Braillekennzeichnung meistens geprägt oder in Kunststoff, erhaben, gegossen. Die geprägten Varianten weisen meistens störende Verrundungen der Symbole, Ziffern oder Braillekennzeichnung auf, zudem können die geprägten Ziffern praktisch nicht dauerhaft mit einer kontrastreichen Farbe gekennzeichnet werden. Die Kunststoff Varianten werden vielfach gleichzeitig als Quittierung verwendet und es sind sichtbare Verbindungsstege bei komplizierten Ziffern (z.B. 0, 4, 6, 8, 9) vorhanden. Zudem sind die Kunststoffziffern anfällig gegen Vandalismus insbesondere gegen Beschädigung mittels Feuerzeugen und Messer.

Gemäss der Erfindung sind die Symbole, Ziffern und Braillekennzeichnungen auf der Trägerplatte aufgesetzt und aus einem metallischen Werkstoff gefertigt, welcher eine unterschiedliche, dauerhafte Farbgebung ermöglicht und gleichzeitig resistenter gegen Vandalismus (Feuerzeuge, Messer, etc.) ist.

Alle erläuterten Merkmale sind nicht nur in der jeweils angegebenen Kombination, sondern auch in anderen Kombinationen oder in Alleinstellung verwendbar, ohne den Rahmen der Erfindung zu verlassen.

Verschiedene Ausführungsbeispiele der Erfindung sind in den schematischen Zeichnungen dargestellt und in der nachfolgenden Beschreibung näher erläutert. Es zeigen:
Fig. 1 eine explodierte Gesamtdarstellung der Teile eines Rufgebers gemäss einer ersten Ausführungsform/Einbauvariante der Erfindung,
Fig. 2 eine explodierte Gesamtdarstellung eines Rufgebers gemäss einer zweiten Ausführungsform/Einbauvariante der Erfindung,
Fig. 3 einen Rufgeber aufgesetzt montiert,
Fig. 4 einen Rufgeber bündig montiert,
Fig. 5 eine Schnittansicht gemäss Linie A-A in Fig. 3 des Rufgebers bei einer aufgesetzten Einbauvariante,
Fig. 6 eine Schnittansicht gemäss Linie S-S in Fig. 4 des Rufgebers bei einer bündigen Einbauvariante

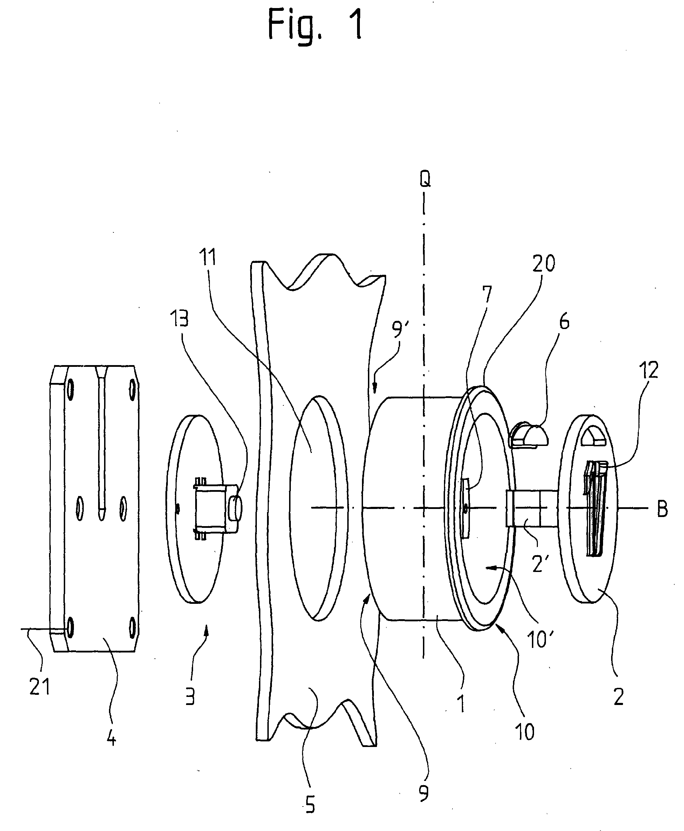

In Figur 1 ist ein Rufgeber in unmontiertem Zustand bei einer ersten Ausführungsform dargestellt, die der aufgesetzten Einbauvariante entspricht. Dieser Rufgeber zur Eingabe von Steuerbefehlen besteht im wesentlichen aus einem Gehäuse 1, im folgendem auch Rufgebergehäuse 1 genannt, einem beispielsweise als Trägerplatte 2 ausgebildeten Trägerelement, einer Elektronikeinheit 3 und aus einem beispielsweise als Halteplatte 4 ausgebildeten Halteelement.

Das Rufgebergehäuse 1 weist in Längsrichtung eine Betätigungsachse B und quer dazu eine Querachse Q auf. Der Rufgeber wird in eine dazu bestimmte Frontplatte 5 eingebaut, die zu diesem Zweck eine Einbauausschnitt 11 aufweist. Die Elektronikeinheit 3 weist unter anderem Kontakte 13 auf, deren Betätigung durch Druck auf die Trägerplatte 2 erfolgt. Die Trägerplatte 2 kann wahlweise mit oder ohne ein Quittierungselement 6 ausgerüstet sein. Auf der Trägerplatte 2 sind Symbole, Ziffern und/oder Braillekennzeichnung 12 aufgesetzt.

Das Trägerelement 2 kann einstückig aber auch mehrteilig ausgebildet sein. Es können auch nur Teile davon beweglich sein und/oder betätigt werden. Es können auch mehrere Trägerelemente 2 in einem einzigen Rufgebergehäuse 1 eingebaut werden.

Im Rufgebergehäuse 1 ist ein Positionierungselement 7 zur Positionierung der Trägerplatte 2 vorhanden. Das Rufgebergehäuse 1 weist eine erste Seite 9 und eine entgegengesetzte zweite Seite 10 auf, im folgenden auch erste Stirnseite 9 beziehungsweise zweite Stirnseite 10 des Rufgebergehäuses 1 genannt. Die erste Stirnseite 9 weist eine erste Öffnung 9' und die zweite Stirnseite 10 eine zweite Öffnung 10' auf, die zueinander fluchtend angeordnet sind. Das Positionierungselement 7 ist im Innern des Rufgebergehäuses 1 so angeordnet, dass sie sich in der Mitte zwischen der ersten Öffnung 9' und der zweiten Öffnung 10' beziehungsweise zwischen der ersten Stirnseite 9 und der zweiten Stirnseite 10 befindet. Die erste Stirnseite 9 und die zweite Stirnseite 10 sind somit in Bezug auf das Positionierungselement 7 symmetrisch angeordnet. Dieser Umstand ermöglicht einen Einbau der Trägerplatte 2 von beiden Stirnseiten 9, 10 her, wobei die Trägerplatte 2 immer bündig mit der ersten Stirnseite 9 oder mit der zweiten Stirnseite 10 ist. Das Rufgebergehäuse 1 ist in Richtung der Betätigungsachse B in Bezug auf das Positionierungselement 7 im wesentlichen symmetrisch ausgebildet.

Das Positionierungselement 7 besteht in dieser Ausführungsform im wesentlichen aus nach innen ragenden Laschen/Vorsprünge 7', an welchen entsprechende Befestigungs- / Arretierungsmittel 2' der Trägerplatte 2 eingreifen/einrasten können. Andere Ausführungsformen des Positionierungselementes 7 beziehungsweise des Trägerelementes 2 sind auch möglich, wie zum Beispiel Schlitze mit entsprechenden Eingreifmitteln. Das Positionierungselement kann auch als umlaufender Rand innerhalb des Rufgebergehäuses 1 oder als eine gelochte Platte ausgebildet sein.

Das Rufgebergehäuse 1 ist dermassen ausgeführt, dass die erste Stirnseite 9 genau der Rufgeberform entspricht und die entgegengesetzte zweite Stirnseite 10 einen überstehenden Flansch 20 oder eine Schulter aufweist.

In der aufgesetzten Einbauvariante ragt der Rufgeber um die Flanschdicke über die Frontplatte 5 hinaus. Der hinausragende Flansch 20 an der zweiten Stirnseite 10 fungiert als Anschlag gegenüber der Frontplatte 5. Die als Bedienungsfläche zur Eingabe der Steuerbefehle dienende Trägerplatte 2 ist in dieser Variante in die mit dem Flansch 20 versehene zweite Stirnseite 10 eingebaut. Bei der Betätigung des Rufgebers durch Druck der Trägerplatte 2 wird deswegen keine Gefahr bestehen, dass der Rufgeber nach hinten, d.h. in Richtung des Druckes fällt. Mit der Halteplatte 4, welche am Rufgebergehäuse 1 oder der Elektronikeinheit 3 befestigt wird, kann der Rufgeber, wenn er aufgesetzt montiert werden soll, mit der Frontplatte 5, z.B. mit Schrauben 21, verklemmt werden.

Gemäss der Erfindung ermöglicht diese besondere Ausbildung des Rufgebergehäuses 1 einen Einbau des Rufgebers in die Frontplatte 5 nicht nur aufgesetzt, wie oben beschrieben, sondern auch bündig mit der Frontplatte 5. Um die bündige Einbauvariante zu verwirklichen, genügt es, das Rufgebergehäuse 1 aus Figur 1 um 180 Grad um die Querachse Q zu drehen. Die oben beschriebene Symmetrie des Rufgebergehäuses 1 in Bezug auf das Positionierungselement 7 erlaubt es, die Rufgeberkomponente der aufgesetzten Einbauvariante auch für die bündige Einbauvariante zu verwenden.

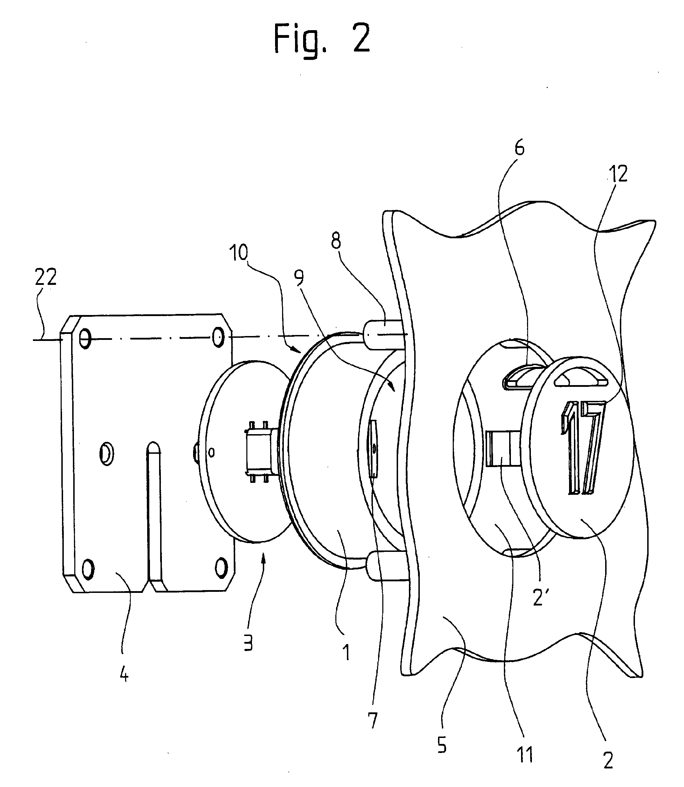

Fig.2 zeigt eine explodierte Darstellung des Rufgebers in der bündigen Einbauvariante, wobei gleiche Elemente mit den gleichen Bezugszeichen wie in Figur 1 bezeichnet werden.

Die als Bedienungsfläche zur Eingabe der Steuerbefehle dienende Trägerplatte 2 ist in dieser Variante in die ohne Flansch 20 versehene erste Stirnseite 9 eingebaut. Wegen der symmetrischen Ausbildung des Rufgebergehäuses 1 werden die Befestigungs- / Arretierungsmittel 2' der Trägerplatte 2 auch in dieser Variante an nach innen ragenden Laschen/Vorsprüngen 7' des Positionierungselementes 7 eingreifen/einrasten.

Bei der Betätigung des Rufgebers durch Druck der Trägerplatte 2 besteht aber dann die Gefahr, dass der Rufgeber nach hinten, d.h. in Richtung des Druckes herausfällt, da kein Anschlag mehr gegen die Frontplatte 5 vorhanden ist. Aus diesem Grund sind für die Befestigung des Rufgebers an der Frontplatte 5 in der bündigen Einbauvariante zusätzliche Befestigungselemente von Vorteil. Diese Befestigungselemente bestehen vorzugsweise im wesentlichen aus zwei Distanzhaltern 8, die an der Frontplatte 5 und an der Halteplatte 4 befestigbar sind. In einer Ausführungsform sind die Distanzhalter 8 als Schweissbolzen ausgebildet, die an der Frontplatte 5 befestigt sind. Die Halteplatte 4 wird mit Hilfe von Schrauben 22 and den Schweissbolzen befestigt.

Selbstverständlich können die Distanzhalter 8 auch an der Halteplatte 4 befestigt sein und dann mit Hilfe von Befestigungsmittel an der Frontplatte 5 angebracht werden.

Dieser Befestigungsmechanismus ermöglicht eine Befestigung des Rufgebers auch bei grösseren Frontplattenstärken. Die maximale Frontplattenstärke wird dabei von der gewählten Höhe des Rufgebergehäuses bestimmt. Die minimale Höhe des Rufgebergehäuses 1 entspricht der maximal definierten Frontplattendicke, plus Flanschdicke. Mit dieser Ausbildung lässt sich der Rufgeber stufenlos in unterschiedliche Frontplattenstärken bis zu einer definierten Frontplattenstärke einbauen. Vorzugsweise kann der Rufgeber in Frontplattenstärken zwischen 1 und 12 mm eingebaut werden. Dickere Frontplatten sind auch möglich.

Der Einbauausschnitt 11 in der Frontplatte 5 ist bei der Einbauvariante bündig und der Einbauvariante aufgesetzt identisch. Durch die symmetrische Ausführung der Einzelteile, der identischen Bauteile für beide Einbauvarianten, bündig und aufgesetzt, und dem Umstand, dass für beide Einbauvarianten identische Einbauausschnitte 11 verwendet werden, kann im Bedarfsfalle die Einbauvariante bündig auch noch auf der Baustelle in Einbauvariante aufgesetzt umgebaut werden. Für beide Einbauvarianten können dieselben Einzelteile wie, Rufgebergehäuse 1, Trägerplatte 2, Elektronikeinheit 3, Halteplatte 4, Quittierungselement 6, Symbole, Ziffern und Braillekennzeichnung 12, verwendet werden.

Das Rufgebergehäuse 1 selbst lässt sich auf zwei unterschiedliche Varianten in die Frontplatte 5 einbauen, zum einen, dass die erste Stirnseite 9 des Rufgebergehäuses 1 mit der Frontplatte 5 bündig ist, zum anderen, dass die zweite Stirnseite 10 des Rufgebergehäuses 1 um die Distanz des Flansches auf der Frontplatte 5 aufgesetzt montierbar ist.

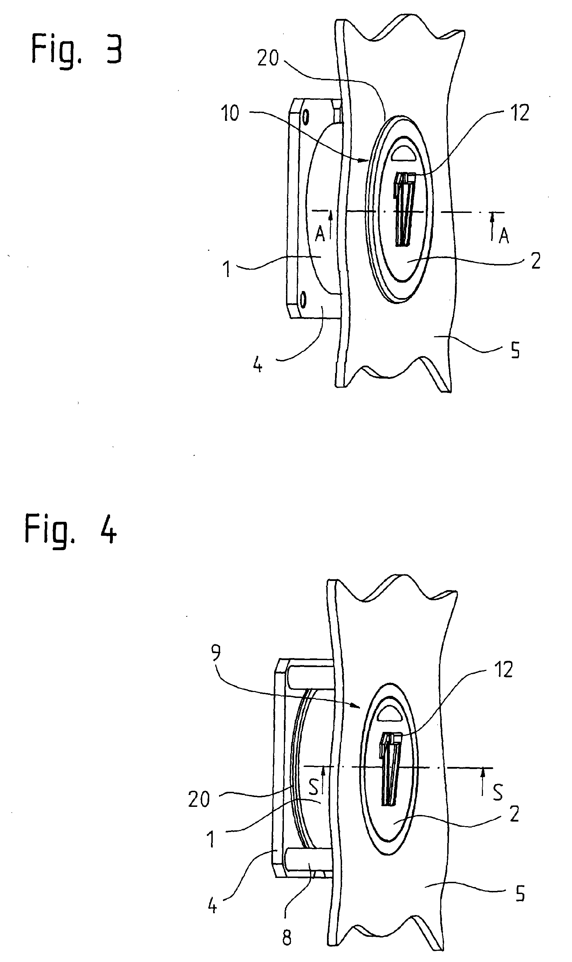

In Figur 3 ist der Rufgeber im aufgesetzten montierten Zustand und in Figur 4 der Rufgeber im bündigen montierten Zustand dargestellt. Die Trägerplatte 2 mit den Symbolen 12 und die Elektronikeinheit 3, sind vom Rufgebergehäuse 1 aufgenommen, wobei in Figur 4 das Rufgebergehäuse 1 aus Figur 3 um 180 Grad um die Querachse Q gedreht worden ist und zusätzlich Distanzhalter 8 für die Befestigung der Halteplatte 4 mit der Frontplatte 5 eingesetzt worden sind. Ansonsten sind alle Elemente der Figuren 3 und 4 gleich. Die Trägerplatte 2 ist in Figur 3 von der mit dem Flansch 20 versehene zweiten Stirnseite 10 her, dagegen in Figur 4 ist sie von der flanschlosen ersten Stirnseite 9 her eingebaut.

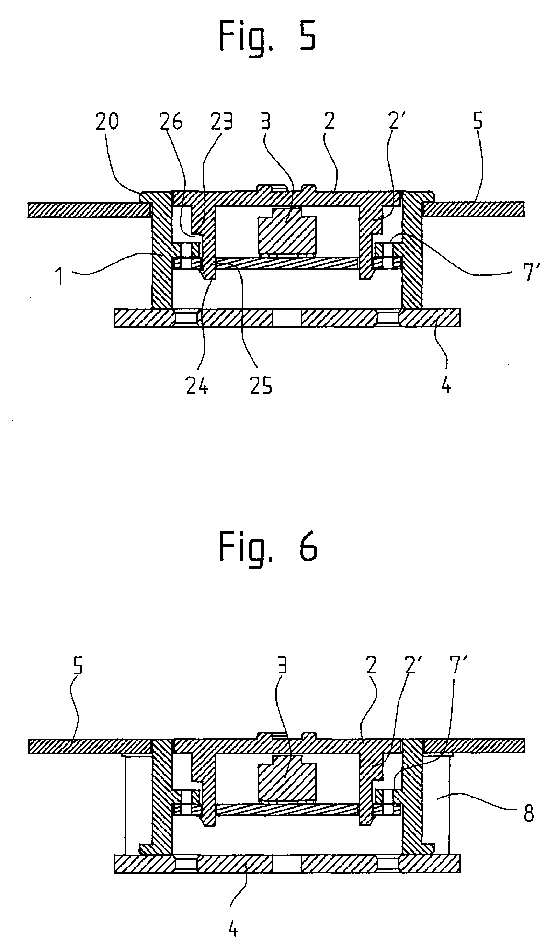

Figur 5 zeigt eine vertikale Schnittansicht des Rufgebers aufgesetzt montiert. Diese Figur dient zur klareren schematischen Darstellung der einzelnen Rufgeberkomponenten im montierten Zustand. Das Rufgebergehäuse 1 weist in seinem inneren Umfang als Positionierungselement 7 zwei Laschen 7' auf, die mit entsprechenden Eingreifmitteln 2' der Trägerplatte 2 zusammenwirken. Die Laschen 7' dienen innenseitig als Begrenzungsfläche der Elektronikeinheit 3 und aussenseitig, das heisst von der Seite der Trägerplatte 2 her, als Begrenzungsfläche für die Eingreifmittel 2' der Trägerplatte 2, die ihrerseits dafür Anschlagfläche 23 aufweisen. In dieser Ausführungsform weisen die Eingreifmittel 2' Nasen 24 auf, die in Schlitze 25 der Stützplatte der Elektronikeinheit 3 einrasten. Die Stützplatte ist in dieser Ausführungsform als Leiterplatte ausgebildet. In dieser Weise stellen die Laschen 7' eine Begrenzungsfläche gegen innen für die Trägerplatte 2 und gegen aussen für die Elektronikeinheit 3 dar. Die Trägerplatte 2 kann nach innen nur bis zum Positionierungselement 7 verschoben werden, damit die Elektronikeinheit 3 nicht aus dem Rufgebergehäuse 1 herausgedrückt werden kann. In unbetätigtem Zustand, das heisst, wenn die Trägerplatte nicht gedrückt wird, wie in Figur 5 gezeigt, existiert zwischen der Anschlagfläche 23 und der Lasche 7' ein gewisser Spielraum oder Hub 26, der üblicherweise für die korrekte Betätigung der Trägerplatte 2 vorhanden sein soll. Das heisst, wenn die Trägerplatte 2 gedrückt wird, soll sie etwas nach innen verschoben werden, damit die Elektronikeinheit 3 ihre Funktion ausüben kann. Gleichzeitig in unbetriebenem Zustand wird die Trägerplatte 2 in seiner Ausgangsposition, das heisst bündig mit dem Rufgebergehäuse 1, selbst durch die Elektronikeinheit 3 gebracht. In ähnlicher Weise könnte diese Zurückstellung auch durch eine Feder erreicht werden.

Bei Betätigung der Trägerplatte 2 wird somit die Kraftaufnahme nicht vollkommen über die Elektronikeinheit 3, sondern auch über das Positionierungselement 7 aufgenommen.

Die Figur 6, in der eine vertikale Schnittansicht des Rufgebers bündig montiert dargestellt ist, weist die gleichen Elemente wie in der Figur 5 auf, wobei in diesem Fall die Distanzhalter 8 vorhanden sind.

Durch die separaten Bauteile Trägerplatte 2, Symbole, Ziffern oder Braille 12 und das Rufgebergehäuse 1, können auch problemlos verschieden Design-Aspekte und unterschiedliche Farbkombinationen auf einfache Weise realisiert werden. Die unterschiedlichen Möglichkeiten der Farbgebung von Trägerplatte, Rufgebergehäuse, Frontplatte, und Ziffern lassen einen grossen Spielraum bei der Normerfüllung zu.

Die Symbole, Ziffern und Braillekennzeichnungen sind auf der Trägerplatte aufgesetzt und aus einem metallischen Werkstoff gefertigt, welcher eine unterschiedliche, dauerhafte Farbgebung ermöglicht und gleichzeitig resistenter gegen Vandalismus (Feuerzeuge, Messer, etc.) ist.

Das Rufgebergehäuse gemäss der Erfindung kann verschiedene Formen aufweisen. Es kann beispielsweise ein Hohlzylinder oder ein Hohlrohr oder quaderförmig sein. Es kann aus Stahl gefertigt sein, aber auch andere Materialien, wie zum Beispiel Kunststoff, Zinkdruckguss, Aluminium und so weiter sind denkbar.

Der Rufgeber gemäss der Erfidung findet insbesondere für die Rufeingabe bei Aufzügen Verwendung.

Die gleiche Konstruktion kann auch für die Rufeingabe mittels Schlüsselschalter verwendet werden (Schlüsselschalterelemente), für beleuchtete Hinweisfunktionen (Lampenelemente, Anzeiger), für die Befehlseingabe mittels Kippschalter (Kippschalterelemente), für akustische Hinweisfunktionen(Summerelemente, Gegensprechelemente) oder für adressierte Hinweisfunktionen (Adresselemente) verwendet werden.

## Patentansprüche

1. Rufgeber zur Eingabe von Steuerbefehlen, insbesondere für eine Aufzugsanlage, welcher ein Gehäuse (1) und mindestens ein mit diesem zusammenwirkendes Trägerelement (2) aufweist, **dadurch gekennzeichnet, dass**
das Gehäuse (1) so ausgebildet ist, dass es wendbar um eine zur Betätigungsachse (B) senkrecht stehende Achse einsetzbar ist.

2. Rufgeber nach Patentanspruch 1,
**dadurch gekennzeichnet, dass**
das Gehäuse (1) eine erste Seite (9) und eine zweite Seite (10) aufweist, wobei das Gehäuse (1) zum Positionieren des Trägerelementes (2) ein Positionierungselement (7) aufweist, das am Gehäuse (1) so angeordnet ist, dass das Trägerelement (2) sowohl von der ersten Seite (9) her als auch von der zweiten Seite (10) her einbaubar ist.

3. Rufgeber nach Patentanspruch 2,
**dadurch gekennzeichnet, dass**
das Positionierungselement (7) in Richtung der Betätigungsachse (B) gesehen in der Mitte des Gehäuses (1) angeordnet ist.

4. Rufgeber nach Patentanspruch 3,
**dadurch gekennzeichnet, dass**
das Positionierungselement (7) innerhalb des Gehäuses (1) angeordnet ist.

5. Rufgeber nach einem der vorhergehenden Patentansprüche,
**dadurch gekennzeichnet, dass**
die erste Seite (9) oder die zweite Seite (10) des Gehäuses (1) einen hervorstehenden Flansch (20) aufweist.

6. Rufgeber nach Patentanspruch 5,
**dadurch gekennzeichnet, dass**
das Gehäuse (1) in montiertem Zustand bündig oder aufgesetzt mit einer dazu bestimmten Frontplatte (5) zusammenbaubar ist.

7. Rufgeber nach einem der vorhergehenden Patentansprüche,
**dadurch gekennzeichnet, dass**
das Gehäuse (1) eine glatte Aussenkontur aufweist und stufenlos in unterschiedliche Frontplattendicken, vorzugsweise zwischen 1 bis 12 mm, einbaubar ist.

8. Rufgeber nach einem der vorhergehenden Patentansprüche,
**dadurch gekennzeichnet, dass**
das Positionierungselement (7) im wesentlichen aus einem umlaufenden Rand oder aus Laschen oder aus einer gelochten Platte (7') besteht.

9. Rufgeber nach einem der vorhergehenden Patentansprüche,
**dadurch gekennzeichnet, dass**
das Trägerelement (2) Zeichen (12) aufweist, die aus einem metallischen Werkstoff bestehen und auf dem Trägerelement (2) aufgesetzt angeordnet sind.

10. Verwendung des Rufgebers nach einem der Patentansprüche 1 bis 9 in einem Aufzugstableau.
